# EUROPEAN PATENT SPECIFICATION

(11) **EP 2 581 967 B1**
(45) Date of publication and mention of the grant of the patent: **23.11.2016**
(21) Application number: 12176676.0
(22) Date of filing: 17.07.2012
(51) Int. Cl.: H01M 2/20, H01M 2/24, H01M 6/42, H01M 2/02

(54) **Battery pack and lead plate for a battery pack**
Batteriepack und Bleiplatte für Batteriepack
Bloc-batterie et plaque de plomb pour bloc-batterie

(30) Priority: 11.10.2011 US 201161545836 P; 18.05.2012 US 201213475907
(43) Date of publication of application: 17.04.2013
(73) Proprietor: Samsung SDI Co., Ltd., Gyeonggi-do (KR)
(72) Inventor: Park, In-Soo, Yongin-si (KR); Park, Sang-Jin, Yongin-si (KR)
(74) Representative: Gulde & Partner

(56) References cited:
- EP-A1- 1 427 036
- EP-A2- 2 715 838
- GB-A- 2 458 943
- JP-A- 2003 031 193
- JP-A- 2003 168 409
- JP-A- 2008 235 028
- US-A1- 2006 166 086
- US-B1- 6 462 297

## Description

The present invention relates to a battery pack and a lead plate for a battery pack.

### Description of the Related Art

Secondary batteries are chargeable/dischargeable batteries unlike primary batteries that are unable to be charged. Such secondary batteries have been widely used in small high-tech electronic devices, such as mobile phones, personal digital assistants (PDAs), laptop computers, and the like, and energy storing systems.

Secondary batteries may be the type of single battery or a plurality of batteries that are electrically connected to one another according to types of external electronic devices in which secondary batteries are used. For example, small devices, such as mobile phones, are operable with output and capacity of one battery for a predetermined amount of time, whereas medium or large devices, such as laptop computers, portable digital versatile discs (DVDs), small personal computers (PCs), and the like, have to use a plurality of batteries due to large output and capacity.

Battery packs including a protection circuit etc. connected to a plurality of battery cells connected in series and/or in parallel, are used. In order for such battery packs to have sufficient output and capacity when they are manufactured, first, electrical connection between the plurality of battery cells has to be stably performed. In addition, as the demand for smaller and thinner external electronic devices increases, battery packs gradually become smaller and thinner.

GB 2 458 943 A discloses a battery pack including a copper connector plate provides with nickel containing metal connector strips.

### SUMMARY

According to one aspect of the present invention, there is provided a battery pack comprising a plurality of battery cells including electrode tabs; and at least one lead plate including at least two end portions and a body portion between the end portions. The battery pack is characterized in that the lead plate includes a first metal layer and a second metal layer, wherein the first and second metal layers overlap in the body portion, but the end portions include only one of the first metal layer or second metal layer.

Preferably, the end portions include electrode connecting portions for electrically connecting to the electrode tabs of the battery cells. The battery pack may further comprise a temperature cutoff (TCO) electrically connected between the electrode connecting portion and the electrode tab. In addition, the battery pack may comprise an auxiliary lead tab electrically connected between the TCO and the electrode tab.

The battery pack further includes a protection circuit module including a terminal and the lead plate includes a terminal connecting portion for electrically connecting to the terminal of the protection circuit module. A width of the body portion may be less than a width of the terminal connecting portion and/or a width of the body portion may be less than a width of the electrode connecting portions.

Preferably, the first and second metal layers are formed of the same material. The lead plate preferably further comprises an insulating material surrounding the body portion.

Preferably, the first and second metal layers are integrated together by at least one of welding or a conductive adhesive.

A thickness of the body portion is preferably greater than a thickness of the electrode connecting portions and the terminal connecting portions.

According to another aspect of the present invention, there is provided a lead plate for a battery pack including at least two end portions and a body portion between the end portions. The lead plate includes a first metal layer and a second metal layer, wherein the first and second metal layers overlap in the body portion, but the end portions include only one of the first metal layer or second metal layer. The lead plate further includes a terminal connecting portion for electrically connecting to a terminal of a protection circuit module.

### BRIEF DESCRIPTION OF THE DRAWINGS

P09642EP / G10058
FIG. 1A is an exploded perspective view schematically illustrating a lead plate according to an embodiment of the present invention;
FIG. 1B is a perspective view of the lead plate illustrated in FIG. 1 A;
FIG. 1C is a perspective view of the lead plate illustrated in FIG. 1B that is coated with an insulating material;
FIG. 2A is an exploded perspective view schematically illustrating a lead plate according to another embodiment of the present invention;
FIG. 2B is a perspective view of the lead plate illustrated in FIG. 2A;
FIG. 2C is a perspective view of the lead plate illustrated in FIG. 2B that is coated with an insulating material;
FIG. 3A is an exploded perspective view schematically illustrating a lead plate according to another embodiment of the present invention;
FIG. 3B is a perspective view of the lead plate illustrated in FIG. 3A;
FIG. 3C is a perspective view of the lead plate illustrated in FIG. 3B that is coated with an insulating material;
FIG. 4 is an exploded perspective view schematically illustrating a battery pack according to an embodiment of the present invention;
FIG. 5A is a perspective view of a first lead plate, a temperature cutoff (TCO), and auxiliary lead tabs that are used in the battery pack illustrated in FIG. 4;
FIG. 5B is an exploded perspective view of FIG. 5A;
FIG. 6 is a perspective view of a third lead plate that is used in the battery pack illustrated in FIG. 4;
FIG. 7 is a perspective view of a portion of the battery pack illustrated in FIG. 4;
FIG. 8 is an exploded perspective view schematically illustrating a battery pack according to another embodiment of the present invention;
FIG. 9 is a perspective view of a first lead plate that is used in the battery pack illustrated in FIG. 8; and
FIG. 10 is a perspective view of a third lead plate that is used in the battery pack illustrated in FIG. 8.

### DETAILED DESCRIPTION

Reference will now be made in detail to embodiments, examples of which are illustrated in the accompanying drawings, wherein like reference numerals refer to the like elements throughout.

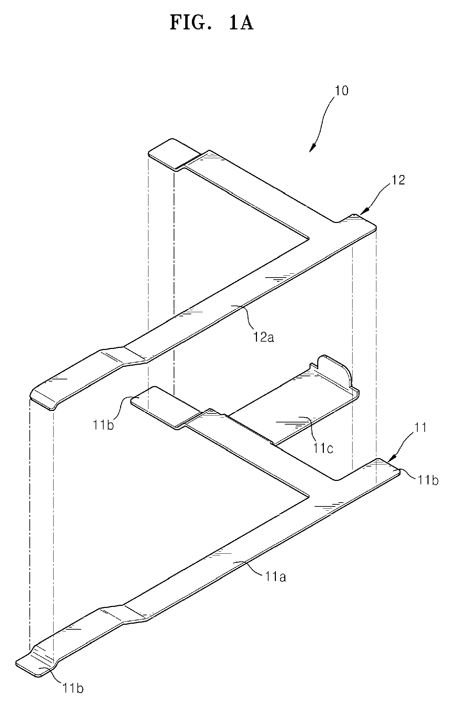

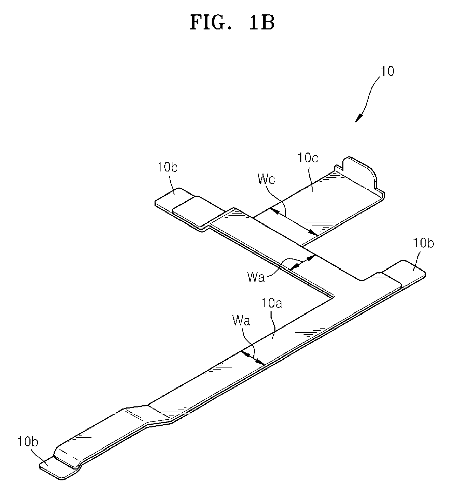

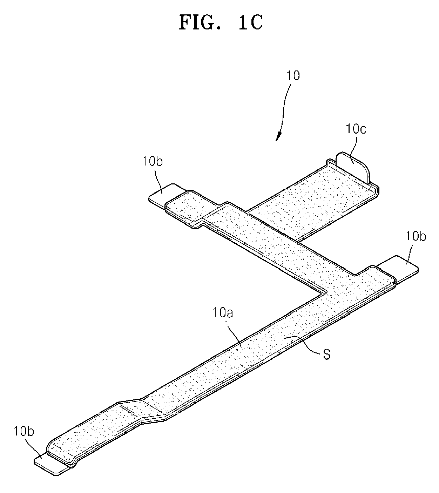

FIG. 1A is an exploded perspective view schematically illustrating a lead plate 10 according to an embodiment of the present invention, and FIG. 1B is a perspective view of the lead plate 10 illustrated in FIG. 1A, and FIG. 1C is a perspective view of the lead plate 10 illustrated in FIG. 1B that is coated with an insulating material.

The lead plate 10 is a medium that electrically connects elements of a battery pack. The lead plate 10 connects a plurality of battery cells electrically and a battery cell and a protection circuit module electrically.

Referring to FIG. 1A, the lead plate 10 includes at least two metallic layers. Here, the lead plate 10 includes a first metallic layer 11 and a second metallic layer 12. In this regard, the first and second metallic layers 11 and 12 are formed of a conductive material so that a current flows through the first and second metallic layers 11 and 12. The conductive material may be nickel (Ni), iron (Fe), aluminum (Al), copper (Cu) or an alloy thereof. The first metallic layer 11 and the second metallic layer 12 may be integrated with each other by welding such as spot welding, ultrasound welding, laser welding, soldering or the like. In this case, the first and second metallic layers 11 and 12 may include the same material so as to improve an adhesion property thereof by welding. Alternatively, the first metallic layer 11 and the second metallic layer 12 may be integrated with each other by using a conductive adhesive.

The first metallic layer 11 includes a first body portion 11 a and a terminal connecting portion 11 c that extends from the first body portion 11 a in one direction. The first body portion 11 a is approximately T-shaped, and a width of the first body portion 11 a is smaller than a width of the terminal connecting portion 11c.

The second metallic layer 12 includes a second body portion 12a that is approximately T-shaped so as to overlap with the first body portion 11 a. Ends of the second body portion 12a are shorter than ends of the first body portion 11 a, and thus, when the first and second metallic layers 11 and 12 overlap with each other, the ends of the first body portion 11 a constitute electrode connecting portions 11 b that do not overlap with the second metallic layer 12 and are exposed to the outside. The electrode connecting portions 11 b may be electrically connected to electrodes of the battery cell by welding.

When the first and second metallic layers 11 and 12 overlap with each other, a portion of the first metallic layer 11 that does not overlap with the second metallic layer 12 may also be the terminal connecting portion 11 c as well as the ends of the first body portion 11 a. The terminal connecting portion 11c extends from the first body portion 11 a in one direction and has a greater width than that of the first body portion 11 a. The terminal connecting portion 11 c is electrically connected to terminals of the protection circuit module by welding.

Referring to FIG. 1B, the first and second metallic layers 11 and 12 overlap with each other and are integrated with each other so that the lead plate 10 is formed. In this case, when the first body portion 11 a and the second body portion 12a overlap with each other so that a body portion 10a of the lead plate 10 is formed, and ends of the first body portion 11 a that do not overlap with the second body portion 12a, i.e., the electrode connecting portions 11 b and the terminal connecting portion 11 c of the first body portion 11 a constitute electrode connecting portions 10b and a terminal connecting portion 10c of the lead plate 10, respectively. The body portion 10a of the lead plate 10 is formed as two metallic layers, whereas each of the electrode connecting portions 10b and the terminal connecting portion 10c of the lead plate 10 is formed as a one metallic layer.

Each of the electrode connecting portions 10b and the terminal connecting portion 10c of the lead plate 10 is formed as a one metallic layer, and thus, the electrode connecting portions 10b and the terminal connecting portion 10c is easily welded to each other. If each of the electrode connecting portions 10b and the terminal connecting portion 10c is formed as two metallic layers, welding of the metallic layers that constitute the electrode connecting portions 10b or the terminal connecting portion 10c and welding of elements to be welded to the metallic layers, for example, electrodes of the battery cell or terminals of the protection circuit module, have to be performed. Thus, the number of welding processes increases, and an adhesive force therebetween is lowered compared to a case where an adhesive force between the electrode connecting portions 10b and the terminal connecting portion 10c, each of which is formed as a one metallic layer.

The body portion 10a of the lead plate 10 is formed by overlapping two metallic layers with each other and thus has an increased thickness, a width of the lead plate 10 may be reduced compared to a width of a lead plate formed as a one metallic layer. In other words, the body portion 10a of the lead plate 10 may include at least two metallic layers so as to reduce the width of the lead plate 10 and to prevent an increase in resistance of the lead plate 10. On the other hand, since the terminal connecting portion 10c is formed as a one metallic layer, resistance of the terminal connecting portion 10c may be increased compared to resistance of the body portion 10a of the lead plate 10. In order to prevent such an increase in resistance of the terminal connecting portion 10c, a width Wc of the terminal connecting portion 10c may be greater than a width Wa of the body portion 10a.

Referring to FIG. 1C, the lead plate 10 excluding a portion for electrical connection may be surrounded by an insulating material S, thereby preventing short-circuit between peripheral devices. For example, the insulating material S surrounds the lead plate 10 excluding the electrode connecting portions 10b and the terminal connecting portion 10c of the lead plate 10. The insulating material S may include material, such as Polyimide (PI). In the current embodiment, a length of the terminal connecting portion 10c is large so that the insulating material S surrounds the remaining regions of the terminal connecting portion 10c while an end of the terminal connecting portion 10c is exposed to the outside.

The length of the terminal connecting portion 10c may be small, as in the electrode connecting portions 10b. In this case, the terminal connecting portion 10c may not be surrounded by the insulating material S and may be exposed to the outside, as in the electrode connecting portions 10b, and the width Wc of the terminal connecting portion 10c may not be greater than the width Wa of the body portion 10a.

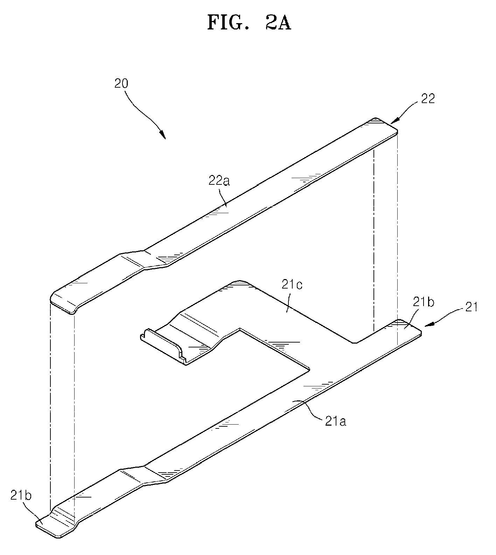

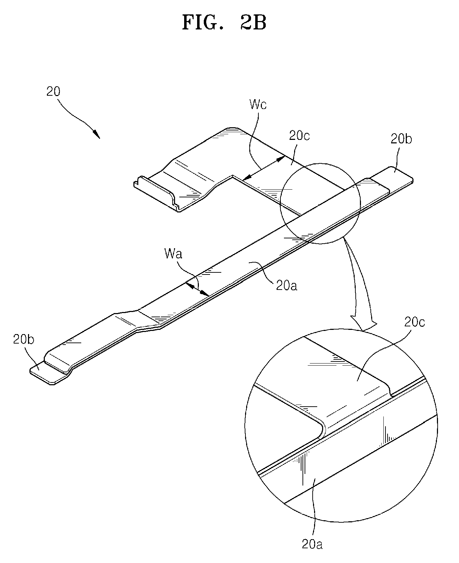

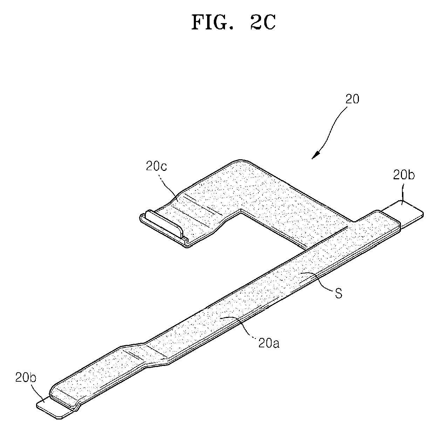

FIG. 2A is an exploded perspective view schematically illustrating a lead plate 20 according to another embodiment of the present invention, and FIG. 2B is a perspective view of the lead plate 20 illustrated in FIG. 2A, and FIG. 2C is a perspective view of the lead plate 20 illustrated in FIG. 2B that is coated with an insulating material.

Referring to FIG. 2A, the lead plate 20 is formed by integrating a first metallic layer 21 and a second metallic layer 22 with each other by welding or by using a conductive adhesive. In this case, the first metallic layer 21 and the second metallic layer 22 are formed of the same metallic material so as to improve an adhesion property thereof by welding.

The first metallic layer 21 includes a first body portion 21 a and a terminal connecting portion 21 c that extends from the first body portion 21 a in one direction. The first body portion 21 a is approximately I-shaped, and the terminal connecting portion 21 c is L-shaped.

The second metallic layer 22 is approximately I-shaped so as to overlap with the first body portion 21 a and is shorter than the first body portion 21 a so that, when the first and second metallic layers 21 and 22 overlap with each other, both ends of the first body portion 21 a may constitute electrode connecting portions 21 b that do not overlap with the second metallic layer 22 and are exposed to the outside.

Referring to FIG. 2B, the lead plate 20 that is formed by overlapping the first and second metallic layers 21 and 22 with each other includes a body portion 20a that is formed as two metallic layers, and electrode connecting portions 20b and a terminal connecting portion 20c, each of which is formed as a one metallic layer. The electrode connecting portions 20b extends from both ends of the body portion 20a and is electrically connected to the electrodes of the battery cell, and the terminal connecting portion 20c extends from one side of the body portion 20a and is electrically connected to the terminals of the protection circuit module.

The body portion 20a of the lead plate 20 is formed by overlapping two metallic layers with each other and thus has an increased thickness, a width of the lead plate 20 is reduced compared to a width of a lead plate formed as a one metallic layer. On the other hand, since the terminal connecting portion 20c is formed as a one metallic layer, resistance of the terminal connecting portion 20c may be increased compared to resistance of the body portion 20a of the lead plate 20. In order to prevent such an increase in resistance of the terminal connecting portion 20c, a width Wc of the terminal connecting portion 20c is greater than a width Wa of the body portion 20a.

Referring to an enlarged portion of FIG. 2B, the terminal connecting portion 20c and the body portion 20a are bent approximately perpendicular to each other. Accordingly, even though a plurality of battery cells and a protection circuit module may be arranged in various shapes, the lead plate 20 is positioned in a proper position.

Referring to FIG. 2C, the lead plate 20 excluding a portion for electrical connection is surrounded by an insulating material S and may prevent short-circuit between peripheral devices. In the current embodiment, the terminal connecting portion 20c extends long, the remaining regions of the lead plate 20 excluding the end of the terminal connecting portion 20c is surrounded by the insulating material S.

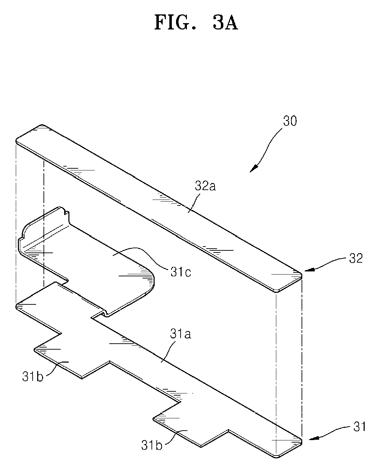

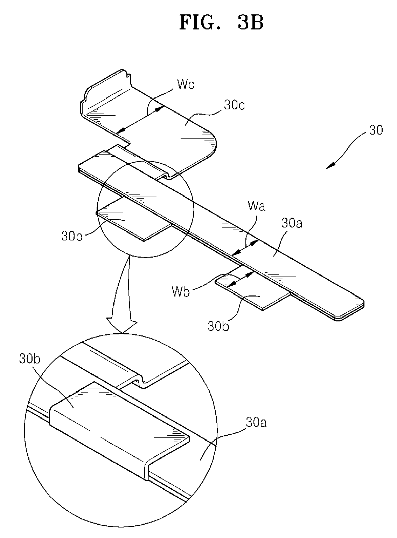

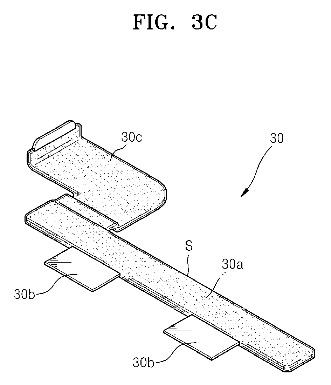

FIG. 3A is an exploded perspective view schematically illustrating a lead plate 30 according to another embodiment of the present invention, and FIG. 3B is a perspective view of the lead plate 30 illustrated in FIG. 3A, and FIG. 3C is a perspective view of the lead plate 30 illustrated in FIG. 3B that is coated with an insulating material.

Referring to FIG. 3A, the lead plate 30 is formed by integrating a first metallic layer 31 and a second metallic layer 32 with each other by welding or by using a conductive adhesive. In this case, the first metallic layer 31 and the second metallic layer 32 may be formed of the same metallic material so as to improve an adhesion property thereof by welding.

The first metallic layer 31 includes a first body portion 31 a, electrode connecting portions 31 b that extend from the first body portion 31 a in one direction, and a terminal connecting portion 31 c that extends from one side of the first body portion 31 a. The first body portion 31 a is approximately I-shaped, and the terminal connecting portion 31 c is L-shaped. The second metallic layer 32 is approximately I-shaped so as to overlap with the second body portion 31 a.

When the lead plate 30 is formed by overlapping the first and second metallic layers 31 and 32 with each other, the terminal connecting portion 31 c and the electrode connecting portions 31 b of the first metallic layer 31 do not overlap with the second metallic layer 32.

Referring to FIG. 3B, the lead plate 30 that is formed by overlapping the first and second metallic layers 31 and 32 with each other includes a body portion 30a that is formed as two metallic layers and electrode connecting portions 30b and a terminal connecting portion 30c, each of which is formed as a one metallic layer. The electrode connecting portions 30b protrudes from one side of the body portion 30a and is electrically connected to the electrodes of the battery cell. The terminal connecting portion 30c extends from one side of the body portion 30a and is electrically connected to the terminals of the protection circuit module.

Since the body portion 30a of the lead plate 30 is formed by overlapping two metallic layers with each other and thus has an increased thickness, a width of the lead plate 30 is reduced compared to a width of a lead plate formed as a one metallic layer. On the other hand, since the terminal connecting portion 30c is formed as a one metallic layer, resistance of the terminal connecting portion 30c may be increased compared to resistance of the body portion 30a of the lead plate 30. In order to prevent such an increase in resistance of the terminal connecting portion 30c, a width Wc of the terminal connecting portion 30c is greater than a width Wa of the body portion 30a.

Referring to an enlarged portion of FIG. 3B, the electrode connecting portions 30b is bent towards the body portion 30a of the lead plate 30. Accordingly, even though a plurality of battery cells and a protection circuit module may be arranged in various shapes, the lead plate 30 may be positioned in a proper position.

For example, the electrode connecting portions 30b may be bent towards the body portion 30a so as to be approximately parallel to the body portion 30a of the lead plate 30. In this case, a width Wb of the electrode connecting portion 30b may be the same as or less than the width Wa of the body portion 30a so that the bent electrode connecting portions 30b do not protrude in a widthwise direction of the body portion 30a any more.

Referring to FIG. 3C, the lead plate 30 excluding a portion for electrical connection is surrounded by an insulating material S preventing short-circuit between peripheral devices. In the current embodiment, the terminal connecting portion 30c extends long, the remaining regions of the lead plate 30 excluding the end of the terminal connecting portion 30c may be surrounded by the insulating material S.

The lead plates 10, 20, and 30 illustrated in FIGS. 1A through 1C, FIGS. 2A through 2C, and FIGS. 3A through 3C, respectively, use at least two metallic layers so as to increase thicknesses of the body portions 10a, 20a, and 30a and to reduce widths thereof. An increase in resistance of the terminal connecting portions 10c, 20c, and 30c may be prevented while the widths of the body portions 10a, 20a, and 30a may be reduced, so that electrodes of the battery cell or the battery cell and the protection circuit module may be electrically connected to each other in a narrow space.

In addition, each of the electrode connecting portions 10b, 20b, and 30b and the terminal connecting portions 10c, 20c, and 30c to be welded to each other is formed as a one metallic layer so that the electrode connecting portions 10b, 20b, and 30b may be easily electrically connected to the electrodes of the battery cell by welding and the terminal connecting portions 10c, 20c, and 30c may be easily connected to the terminals of the protection circuit module by welding.

The widths of the terminal connecting portion s 10c, 20c, 30c, each of which is formed as a one metallic layer, are greater than the widths of the body portions 10a, 20a, and 30a so that resistance may be prevented from being increased when currents that have flowed through the body portions 10a, 20a, and 30a formed as two metallic layers flow through the terminal connecting portion s 10c, 20c, and 30c.

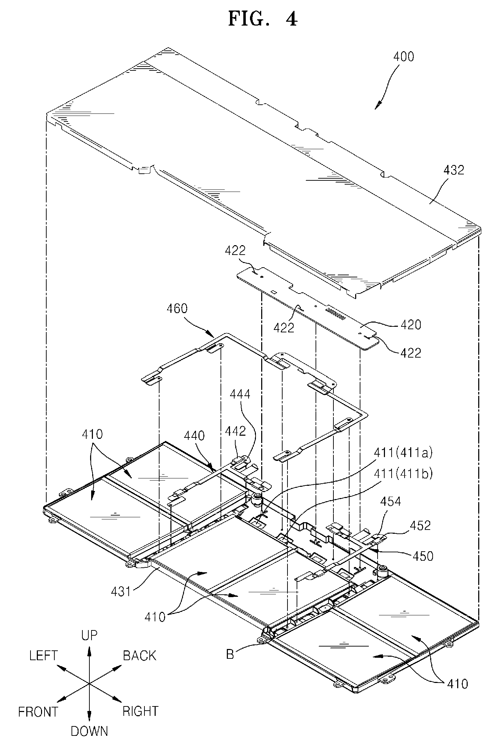

FIG. 4 is an exploded perspective view schematically illustrating a battery pack 400 according to an embodiment of the present invention.

Referring to FIG. 4, the battery pack 400 includes a plurality of battery cells 410, a protection circuit module 420, a lower case 431 and an upper case 432, and a first lead plate 440, a second lead plate 450, and a third lead plate 460 that electrically connect the plurality of battery cells 410 and the protection circuit module 420 to each other.

The battery cells 410 may be polymer cells. For example, the battery cells 410 may be manufactured by accommodating an electrode assembly in which a positive electrode plate (not shown) and a negative electrode plate (not shown) are alternately stacked by interposing a separator (not shown) between the positive electrode plate (not shown) and the negative electrode plate (not shown), thereby separating the positive electrode plate (not shown) and the negative electrode plate (not shown) from each other, the electrode assembly being wound in the form of a jelly roll, in a pouch in which an electrolyte is accommodated. An electrode tab 411 including a positive electrode tab 411 a and a negative electrode tab 411 b that are electrically connected to the positive electrode plate and the negative electrode plate, respectively, may be taken out from one side of the battery cell 410.

The protection circuit module 420 prevents over-heat and explosion from occurring due to over-charge, over-discharge or over-current of the plurality of battery cells 410. The protection circuit module 420 may include a safety element including a passive element, such as a resistor or capacitor, or an active element, such as a field effect transistor, or direct circuits.

The protection circuit module 420 includes terminals 422 to be electrically connected to the plurality of battery cells 410. The protection circuit module 420 may include connectors (not shown) to be electrically connected to an external electronic device.

The lower case 431 and the upper case 432 face each other and accommodate the plurality of battery cells 410 and the protection circuit module 420. An accommodation space in which the plurality of battery cells 410 and the protection circuit module 420 are accommodated, is defined by the lower case 431, and the lower case 431 may include a barrier B that prevent short-circuit between peripheral devices.

The lower case 431 and the upper case 432 may include an electric insulating material. For example, the lower case 431 and the upper case 432 may be formed of an injection molding material of insulating resin, such as plastic. Alternatively, the lower case 431 and the upper case 432 may be manufactured of an insulating film having predetermined rigidity. Alternatively, the lower case 431 and the upper caser 432 may include a thin metal material of which outer surface is coated with an insulating film.

The first through third lead plates 440, 450, and 460 may electrically connect the plurality of battery cells 410 and simultaneously may connect the battery cells 410 and the protection circuit module 420. For example, the first lead plate 440 may be electrically connected to positive electrodes of three battery cells 410 disposed on the left side of the battery pack 400, and the second lead plate 450 may be electrically connected to negative electrodes of three battery cells 410 disposed on the right side of the battery pack 400, thereby constituting large current terminals of the battery pack 400. The third lead plate 460 may be electrically connected to negative electrodes of three battery cells 410 disposed on the left side of the battery pack 400 and to positive electrodes of three battery cells 410 disposed on the right side of the battery pack 400, thereby connecting six battery cells 410 in series.

The battery pack 400 illustrated in FIG. 4 includes six battery cells 410.

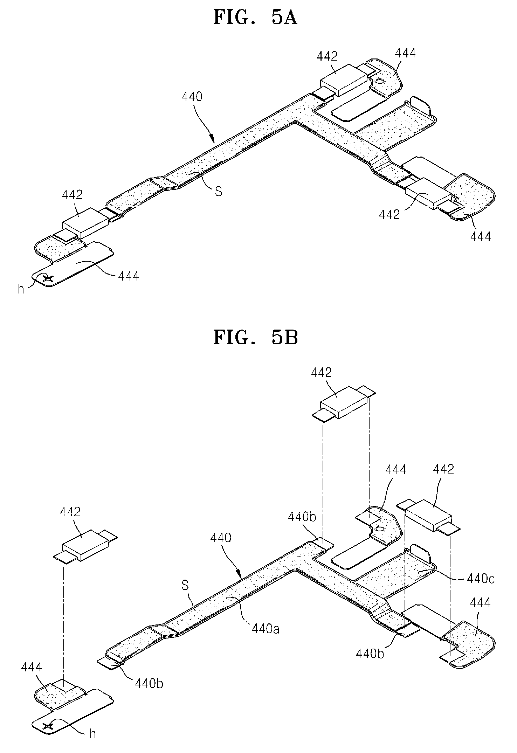

FIG. 5A is a perspective view of the first lead plate 440 that is used in the battery pack 400 illustrated in FIG. 4, and FIG. 5B is an exploded perspective view of FIG. 5A.

Referring to FIGS. 5A and 5B, the first lead plate 440 is formed by integrating two metallic layers with each other in such a way that a body portion 440a, electrode connecting portions 440b, and a terminal connecting portion 440c of the first lead plate 440 are formed. In this case, the body portion 440a of the first lead plate 440 may be formed as two metallic layers, and each of the electrode connecting portions 440b and the terminal connecting portion 440c may be formed as a one metallic layer, and the first lead plate 440 excluding a portion for electrical connection by welding may be surrounded by an insulating material S. A detailed structure of the first lead plate 440 is as illustrated in FIGS. 1A and 1B and thus description thereof will not be provided here.

The first lead plate 440 may include three electrode connecting portions 440b so as to be electrically connected to positive electrodes of three battery cells 410. When the electrode connecting portions 440b are electrically connected to the positive electrodes of the battery cells 410, auxiliary lead tabs 444 may be further provided to connect them. The auxiliary lead tabs 444 may be formed of single metallic layer of which one side is electrically connected to the electrode connecting portions 440b and the other side is directly welded to the positive electrode tab 411 a that is a positive electrode of the battery cell 410.

A temperature cutoff (TCO) 442 is connected between one side of the auxiliary lead tabs 444 and the electrode connecting portions 440b. The TCO 442 may is connected to one side of the auxiliary lead tabs 444 and the electrode connecting portions 440b by welding. The TCO 442 may serve as a fuse that cuts off current when temperature of the battery cells 410 exceeds a reference value.

A hole h is formed in each of the auxiliary lead tabs 444. When the hole h of the auxiliary lead tab 444 is engaged with a protrusion (not shown) formed in the lower case 431, one side of the auxiliary lead tab 444 may be welded to the positive electrode tab 411 a of the battery cell 410. For example, the hole h may have one of a circular shape, a *-shape, a +-shape, and a combined shape thereof.

In addition, since the auxiliary lead tab 444 and the first lead plate 440 are mechanically connected to each other by welding, a position of the first lead plate 440 is fixed. Thus, even when external vibration is transferred to the battery pack 400, an electrical connection between the first lead plate 440 and the battery cells 410 is stably maintained.

The first lead plate 440 includes the terminal connecting portion 440c so as to electrically connect the battery cells 410 and the protection circuit module 420. The terminal connecting portion 440c extends from one side of the first lead plate 440, and an end of the terminal connecting portion 440c that is not surrounded by the insulating material S may be electrically connected to the protection circuit module 420 by welding.

As described above, the first lead plate 440 is electrically connected to the TCO 442 and the auxiliary lead tabs 444. However, such a structure applies the second lead plate 450. The only difference between the first lead plate 440 and the second lead plate 450 is that the second lead plate 450 is electrically connected to the negative electrode tab 411 b that is a negative electrode of the battery cells 410 disposed on the right side of the battery pack 400. Detailed description of the second lead plate 450 is as illustrated in FIGS. 5A and 5B and thus will not be provided here.

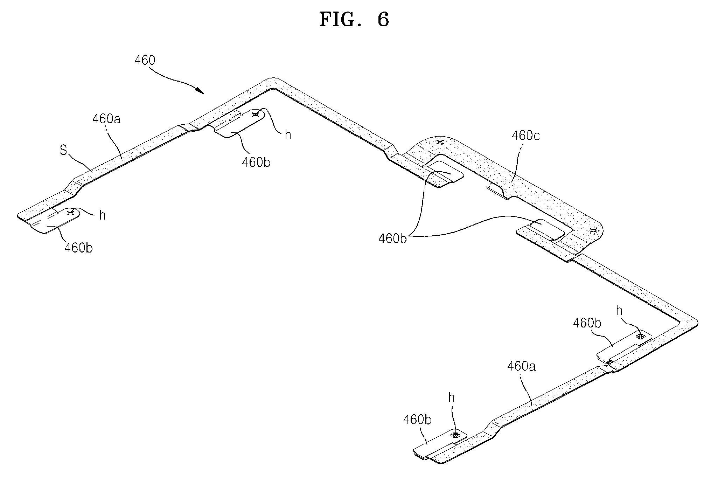

FIG. 6 is a perspective view of the third lead plate 460 that is used in the battery pack 400 illustrated in FIG. 4.

Referring to FIG. 6, the third lead plate 460 is formed by integrating two metallic layers with each other in such a way that a body portion 460a, electrode connecting portions 460b, and a terminal connecting portion 460c of the third lead plate 460 are formed. In this case, the body portion 460a of the third lead plate 460 may be formed as two metallic layers, and each of the electrode connecting portions 460b and the terminal connecting portion 460c is formed as a one metallic layer, and the third lead plate 460 excluding a portion for electrical connection by welding is surrounded by an insulating material S.

Referring to FIGS. 4 and 6, some of the electrode connecting portions 460b of the third lead plate 460 are connected to positive electrodes of the battery cells 410, and the other electrode connecting portions 460b of the third lead plate 460 are electrically connected to negative electrodes of the battery cells 410. For example, three electrode connecting portions 460b disposed on the left side of the battery pack 400 may be welded to negative electrodes of three battery cells 410, and three electrode connecting portions 460b disposed on the right side of the battery pack 400 may be welded to positive electrodes of the remaining three battery cells 410.

A hole h is formed in at least one of the electrode connecting portions 460b and may be engaged with a protrusion (not shown) formed in the lower case 431. The hole h may have one of a circular shape, a *-shape, a +-shape, and a combined shape thereof. By engaging the hole h and the protrusion (not shown) with each other, a position of the third lead plate 460 is fixed. Thus, even when external vibration is transferred to the battery pack 400, an electrical connection between the third lead plate 460 and the battery cells 410 is stably maintained.

The terminal connecting portion 460c of the third lead plate 460 extends from the body portion 460a in one direction and has a greater width than a width of the body portion 460a. An end of the terminal connecting portion 460c may be electrically connected to the protection circuit module 420 by welding.

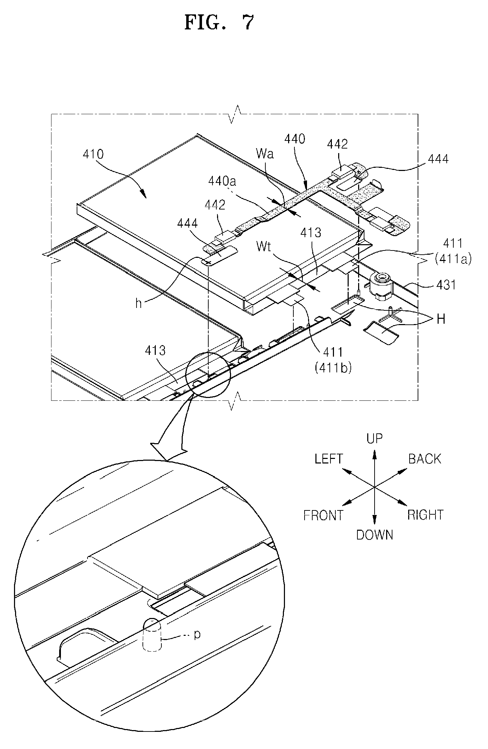

FIG. 7 is a perspective view of a portion of the battery pack 400 illustrated in FIG. 4.

Referring to FIG. 7, a plurality of battery cells 410 are accommodated in the lower case 431. According to the current embodiment, two of the battery cells 410 that are electrically connected to each other by the first lead plate 440, are accommodated in the lower case 431 so that the electrode tab 411 is directed rightwards, and the other one battery cell (not shown) that is electrically connected to the first lead plate 440 is accommodated in the lower case 431 so that the electrode tab 411 is directed backwards. A terrace portion 413 is disposed at one side of the battery cell 410, for example, at a side from which the electrode tab 411 is taken out.

The battery cells 410 are electrically connected to each other by the first lead plate 440. For example, the auxiliary lead tabs 444 that are electrically connected to the electrode connecting portions 440b of the first lead plate 440 are welded to the electrode tab 411 of the battery cells 410 so that the plurality of battery cells 410 may be electrically connected to each other. The TCO 442 is disposed between the auxiliary lead tab 444 and the electrode connecting portion 440b, as described above.

The first lead plate 440 is disposed above the terrace portion 413 of each battery cell 410. A width of the first lead plate 440, for example, a width Wa of the body portion 440a is the same as or less than a width Wt of the terrace portion 413. As described above, two metallic layers overlap with each other so that the width Wa of the body portion 440a of the first lead plate 440 may be small while preventing an increase in resistance of the first lead plate 440. Thus, the first lead plate 440 is disposed in a narrow space of the terrace portion 413.

When the first lead plate 440 is disposed on the terrace portion 413, the auxiliary lead tabs 444 that are connected to the first lead plate 440 are disposed on the electrode tab 411. One end of the auxiliary lead tab 444 is welded to the positive electrode tab 411 a.

A through hole H is formed in the lower case 431 so as to facilitate welding of the auxiliary lead tabs 444 and the electrode tab 411. Upper and lower portions of a region in which the end of the auxiliary lead tab 444 and the positive electrode tab 411 a overlap with each other, may be welded by using a welding rod (not shown). In this case, the welding rod (not shown) that is disposed in the lower portion of the region contacts the electrode tab 411 via the through hole H, and the welding rod (not shown) that is disposed in the upper portion of the region contacts the end of the auxiliary lead tab 444.

A hole h is formed in the auxiliary lead tab 444. The hole h is formed in the auxiliary lead tab 444, and a protrusion p is formed in the lower case 431 that corresponds to the hole h. When the hole h formed in the auxiliary lead tab 444 is engaged with the protrusion p, a position of the auxiliary lead tab 444 is fixed, and the auxiliary lead tabs 444 and the positive electrode tab 411 a may be easily welded to each other. In addition, when the position of the auxiliary lead tabs 444 is fixed, a position of the first lead plate 440 that is connected to the auxiliary lead tabs 444 is also be fixed.

In the current embodiment, the region including three battery cells 410 that are electrically connected to one another by the first lead plate 440 has been described. However, the present invention is not limited thereto. For example, the through hole H that is formed in the lower case 431, as described above with reference to FIG. 7, may be formed in a position that corresponds to the electrode tab 411 of the battery cell 410 illustrated in FIG. 7.

In addition, the hole h may be formed in the auxiliary lead tabs 444 connected to the second lead plate 450 and the electrode connecting portion 460b of the third lead plate 460, and the protrusion p corresponding to the hole h may be formed in the lower case 431, as described above.

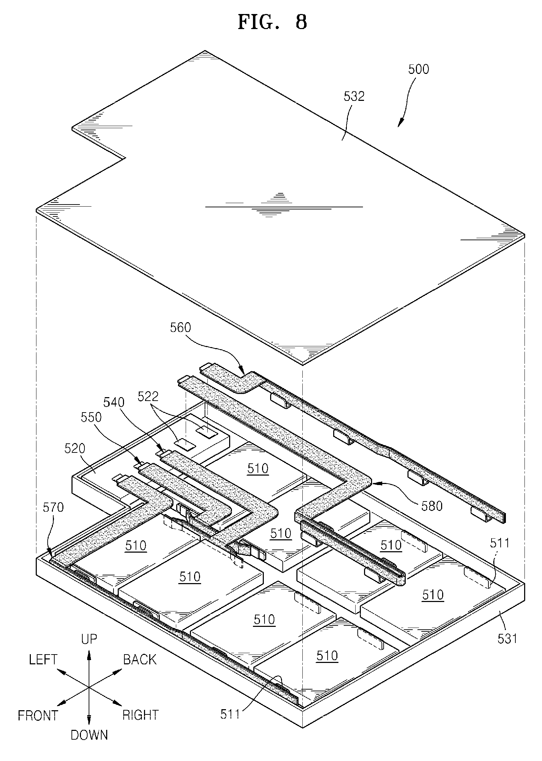

FIG. 8 is an exploded perspective view schematically illustrating a battery pack 500 according to another embodiment of the present invention.

Referring to FIG. 8, the battery pack 500 includes a plurality of battery cells 510, a protection circuit module 520, a lower case 531 and an upper case 532, and a plurality of lead plates 540, 550, 560, 570, and 580 that electrically connect the plurality of battery cells 510 and the protection circuit module 520.

The battery cells 510 may be polygonal cells. For example, the battery cells 510 may be manufactured by accommodating an electrode assembly in which a positive electrode plate (not shown) and a negative electrode plate (not shown) are alternately stacked by interposing a separator (not shown) between the positive electrode plate (not shown) and the negative electrode plate (not shown), thereby separating the positive electrode plate (not shown) and the negative electrode plate (not shown) from each other, the electrode assembly being wound in the form of a jelly roll, in a polygonal can in which an electrolyte is accommodated.

Electrode terminals 511 are formed on sides of the battery cells 510 and have a protrusion shape. The electrode terminals 511 are electrically connected to the negative electrode plate of the electrode assembly and thus constitute negative electrodes. In this regard, the can that accommodates the electrode assembly is electrically connected to the positive electrode plate of the electrode assembly and thus serves as positive electrodes. Although not shown, in order to prevent short-circuit between peripheral devices, an outer surface of the can excluding an opposite side to a side on which the electrode terminal 511 that is a negative electrode is disposed, may be insulated from peripheral devices.

The protection circuit module 520 prevents over-heat and explosion from occurring due to over-charge, over-discharge or over-current of the plurality of battery cells 510. The protection circuit module 520 may include a safety element including a passive element, such as a resistor or capacitor, or an active element, such as a field effect transistor, or direct circuits.

The protection circuit module 520 includes terminals 522 to be electrically connected to the plurality of battery cells 510. The protection circuit module 520 may include connectors (not shown) to be electrically connected to an external electronic device.

The lower case 531 and the upper case 532 face each other and accommodate the plurality of battery cells 510 and the protection circuit module 520. An accommodation space in which the plurality of battery cells 510 and the protection circuit module 520 are accommodated, is defined by the lower case 531, and the lower case 531 may include barriers (not shown) that prevent short-circuit between peripheral devices.

The lower case 531 and the upper case 532 may include an electric insulating material. For example, the lower case 531 and the upper case 532 may be formed of an injection molding material of insulating resin, such as plastic. Alternatively, the lower case 531 and the upper case 532 may be manufactured of an insulating film having predetermined rigidity. Alternatively, the lower case 531 and the upper caser 532 may include a thin metal material of which outer surface is coated with an insulating film.

The plurality of lead plates 540, 550, 560, 570, and 580 is electrically connect the plurality of battery cells 510 and simultaneously connects the battery cells 510 and the protection circuit module 520. Since the battery cells 510 include an embedded fuse (not shown), they do not need to include the TCO 422, as in the first and second lead plates 440 and 450 of the battery pack 400 illustrated in FIGS. 4 through 7, and the auxiliary lead tabs 444 may not be provided.

Hereinafter, the battery pack 500 in which two parallel-connected battery cells 510 are connected in series, will be described below. The current embodiment is just an example, and the battery pack 500 illustrated in FIG. 8 is not limited to the above-described structure.

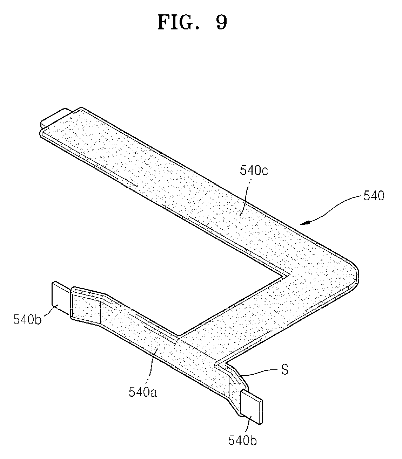

FIG. 9 is a perspective view of a first lead plate 540 that is used in the battery pack 500 illustrated in FIG. 8.

Referring to FIG. 9, the first lead plate 540 is formed by integrating two metallic layers with each other in such a way that a body portion 540a, electrode connecting portions 540b, and a terminal connecting portion 540c of the first lead plate 540 are formed. In this case, the body portion 540a of the first lead plate 540 may be formed as two metallic layers, and each of the electrode connecting portions 540b and the terminal connecting portion 540c may be formed as a one metallic layer, and the first lead plate 540 excluding a portion for electrical connection by welding may be surrounded by an insulating material S. A detailed structure of the first lead plate 540 is as illustrated in FIGS. 2A and 2B and thus description thereof will not be provided here.

Referring to FIGS. 8 and 9, a width of the body portion 540a of the first lead plate 540 is the same as or less than a thickness of the battery cell 510. As described above, two metal layers overlap with each other so that the width of the body portion 540a of the first lead plate 540 is small while preventing an increase in resistance of the first lead plate 540. Thus, the body portion 540a of the first lead plate 540 may be disposed along sides of the battery cells 510 having small thicknesses.

The electrode connecting portions 540b of the first lead plate 540 may be welded to electrodes of the battery cells 510, for example, positive electrodes of two battery cells 510 that are disposed on the front left side of the battery pack 500. Since each of the electrode connecting portions 540b is formed as a one metallic layer, the electrode connecting portions 540b may be easily welded to each other.

The terminal connecting portion 540c of the first lead plate 540 may be welded to the terminals 522 of the protection circuit module 520 and may be bent approximately perpendicular to the body portion 540a so as to be parallel to a top surface of the battery cell 510. If the terminal connecting portion 540c is formed as two metallic layers, the overall thickness of the battery pack 500 is increased by the thickness of the terminal connecting portion 540c that passes through a top surface of the battery cell 510. However, since the terminal connecting portion 540c illustrated in FIG. 9 is formed as a one metallic layer, the overall thickness of the battery pack 500 may be minimized.

The first lead plate 540 is welded to positive electrodes of two battery cells 510 that are disposed on the front left side of the battery pack 500, thereby constituting a positive electrode of a large current terminal. The second lead plate 550 is disposed adjacent to the first lead plate 540 and is welded to positive electrodes of two battery cells 510 that are disposed on the back left side of the battery pack 500, thereby constituting a positive electrode of a large current terminal. A detailed structure of the second lead plate 550 is the same as that of the first lead plate 540 and thus, detailed description thereof will not be provided here.

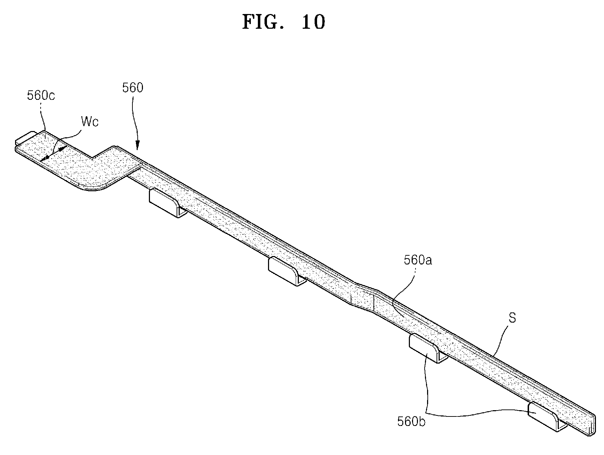

FIG. 10 is a perspective view of a third lead plate 560 that is used in the battery pack 500 illustrated in FIG. 8.

Referring to FIG. 10, the third lead plate 560 is formed by integrating two metallic layers with each other in such a way that a body portion 560a, electrode connecting portions 560b, and a terminal connecting portion 560c of the third lead plate 560 are formed. In this case, the body portion 560a of the third lead plate 560 may be formed as two metallic layers, and each of the electrode connecting portions 560b and the terminal connecting portion 560c may be formed as a one metallic layer, and the third lead plate 560 excluding a portion for electrical connection by welding may be surrounded by an insulating material S.

The electrode connecting portions 560b of the third lead plate 560 are welded to electrodes of the battery cell 510 and may be bent towards the body portion 560a so as to be approximately parallel to the body portion 560a. In this case, a width of the electrode connecting portion 560b may be the same as or less than a width of the body portion 560a so that the bent electrode connecting portions 560b may not protrude in a widthwise direction of the body portion 560a any more, as described above with reference to FIGS. 3A and 3B.

Referring to FIGS. 8 and 10, the width of the body portion 560a of the third lead plate 560 is the same as or less than the thickness of the battery cell 510. As described above, two metal layers overlap with each other so that the width of the body portion 560a of the third lead plate 560 may be small while preventing an increase in resistance of the third lead plate 560. Thus, the body portion 560a of the third lead plate 560 may be disposed along sides of the battery cells 510 having small thicknesses.

The terminal connecting portion 560c of the third lead plate 560 may be welded to the terminals 522 of the protection circuit module 520 and may be bent approximately perpendicular to the body portion 560a so as to be parallel to a top surface of the battery cell 510. Since the terminal connecting portion 560c illustrated in FIG. 10 is formed as a one metallic layer, the overall thickness of the battery pack 500 may be minimized.

The width of the terminal connecting portion 560c is greater than that of the body portion 560a so as to prevent resistance of the third lead plate 560 from being increased when a current that has flowed through the body portion 560a of the third lead plate 560 flows through the terminal connecting portion 560c, as described above.

The third lead plate 560 electrically connects four battery cells 510 that are disposed in a back direction of the battery pack 500 to one another, and the fourth lead plate 570 is disposed symmetrical to the third lead plate 560 and electrically connects four battery cells 510 that are disposed in a front direction of the battery pack 500 to one another. The fifth lead plate 580 electrically connects four battery cells 510 that are disposed in right direction of the battery pack 500 to one another. The structures of the fourth lead plate 570 and the fifth lead plate 580 are the same as the structure of the third lead plate 560 and thus, detailed description thereof will not be provided here.

In the current embodiment, the first and second lead plates 540 and 550 have the structure of the lead plate 20 illustrated in FIGS. 2A through 2C. However, the present invention is not limited thereto. For example, the first and second lead plates 540 and 550 may have a structure in which the electrode connecting portions 540b and 550b protrude from not both ends but sides of the body portions 540a and 550a and may be bent, as in the third through fifth lead plates 560, 570, and 580. That is, the first and second lead plates 540 and 550 may have the structure of the lead plate 30 illustrated in FIGS. 3A through 3C.

The battery packs 400 and 500 illustrated in FIGS. 4 and 8 use a lead plate including a body portion that is formed as two metallic layers and has a small width and thus may use a narrow space efficiently. In addition, since each of electrode connecting portions and a terminal connecting portion is formed as a one metallic layer, the electrode connecting portions and the terminal connecting portion may be easily welded.

A width of the terminal connecting portion formed as a one metallic layer is large so that an increase in resistance of the terminal connecting portion is prevented, and since the thickness of the terminal connecting portion is small, the overall thickness of the battery pack is minimized.

## Claims

1. A battery pack (400) comprising:
a plurality of battery cells (410) including electrode tabs (411); and
at least one lead plate (440) including at least two end portions and a body portion (440a) between the end portions,
wherein the lead plate (440) includes a first metal layer (11) and a second metal layer (12), wherein the first and second metal layers (11, 12) overlap in the body portion (440a), but the end portions include only one of the first metal layer (11) or second metal layer (12) **characterized in that**
the battery pack includes a protection circuit module (420) including a terminal (422) and the lead plate (440) includes a terminal connecting portion (440c) for electrically connecting to the terminal (422) of the protection circuit module (420).

2. The battery pack of claim 1, wherein the end portions include electrode connecting portions (440b) for electrically connecting to the electrode tabs (411) of the battery cells (410).

3. The battery pack of claim 1, wherein a width (Wa) of the body portion (440a) is less than a width of the terminal connecting portion (440c) and/or a width (Wa) of the body portion (440a) is less than a width of the electrode connecting portions (440b).

4. The battery pack of claim 2, further comprising a temperature cutoff (TCO) (442) electrically connected between the electrode connecting portion (440b) and the electrode tab (411).

5. The battery pack of claim 4, further comprising an auxiliary lead tab (444) electrically connected between the TCO (442) and the electrode tab (411).

6. The battery pack of any of the preceding claims, wherein the first and second metal layers (11, 12) are formed of the same material.

7. The battery pack of any of the preceding claims, wherein the lead plate (440) further comprises an insulating material (S) surrounding the body portion (440a).

8. The battery pack of any of the preceding claims, wherein the first and second metal layers (11, 12) are integrated together by at least one of welding or a conductive adhesive.

9. The battery pack of claim 1, wherein a thickness of the body portion (440a) is greater than a thickness of the electrode connecting portions (440b) and the terminal connecting portions (440c).

10. A lead plate (440) for a battery pack including at least two end portions and a body portion (440a) between the end portions, **characterized in that** the lead plate (440) includes a first metal layer (11) and a second metal layer (12), wherein the first and second metal layers (11, 12) overlap in the body portion (440a), but the end portions include only one of the first metal layer (11) or second metal layer (12), **characterized in that**
the lead plate (440) includes a terminal connecting portion (440c) for electrically connecting to a terminal (422) of a protection circuit module (420).

## Patentansprüche

1. Batteriepack (400), aufweisend:
eine Vielzahl von Batteriezellen (410), die Elektrodenstreifen (411) aufweisen; und
zumindest eine Bleiplatte (440), die zumindest zwei Endabschnitte und einen Körperabschnitt (440a) zwischen den Endabschnitten aufweist,
wobei die Bleiplatte (440) eine erste Metallschicht (11) und eine zweite Metallschicht (12) aufweist, wobei sich die erste und zweite Metallschicht (11, 12) im Körperabschnitt (440a) überlappen, aber die Endabschnitte nur eine der ersten Metallschicht (11) oder zweiten Metallschicht (12) aufweisen, **dadurch gekennzeichnet, dass**
der Batteriepack ein Schutzschaltungsmodul (420), das einen Anschluss (422) aufweist, aufweist und die Bleiplatte (440) einen Anschlussverbindungsabschnitt (440c) zum elektrischen Verbinden mit dem Anschluss (422) des Schutzschaltungsmoduls (420) aufweist.

2. Batteriepack nach Anspruch 1, wobei die Endabschnitte Elektrodenverbindungsabschnitte (440b) zum elektrischen Verbinden mit den Elektrodenstreifen (411) der Batteriezellen (410) aufweisen.

3. Batteriepack nach Anspruch 1, wobei eine Breite (Wa) des Körperabschnitts (440a) kleiner als eine Breite des Anschlussverbindungsabschnitts (440c) ist und/oder eine Breite (Wa) des Körperabschnitts (440a) kleiner als eine Breite der Elektrodenverbindungsabschnitte (440b) ist.

4. Batteriepack nach Anspruch 2, ferner aufweisend eine Temperaturabschalteinrichtung (TCO) (442), die elektrisch zwischen den Elektrodenverbindungsabschnitt (440b) und den Elektrodenstreifen (411) geschaltet ist.

5. Batteriepack nach Anspruch 4, ferner aufweisend einen Hilfsleitungsstreifen (444), der elektrisch zwischen die TCO (442) und den Elektrodenstreifen (411) geschaltet ist.

6. Batteriepack nach einem der vorhergehenden Ansprüche, wobei die erste und zweite Metallschicht (11, 12) aus dem gleichen Material ausgebildet sind.

7. Batteriepack nach einem der vorhergehenden Ansprüche, wobei die Bleiplatte (440) ferner ein Isoliermaterial (S), das den Körperabschnitt (440a) umgibt, aufweist.

8. Batteriepack nach einem der vorhergehenden Ansprüche, wobei die erste und zweite Metallschicht (11, 12) durch zumindest eines einer Schweißung oder eines leitfähigen Klebers miteinander integriert sind.

9. Batteriepack nach Anspruch 1, wobei eine Dicke des Körperabschnitts (440a) größer als eine Dicke der Elektrodenverbindungsabschnitte (440b) und der Anschlussverbindungsabschnitte (440c) ist.

10. Bleiplatte (440) für einen Batteriepack, aufweisend zumindest zwei Endabschnitte und einen Körperabschnitt (440a) zwischen den Endabschnitten, **dadurch gekennzeichnet, dass**
die Bleiplatte (440) eine erste Metallschicht (11) und eine zweite Metallschicht (12) aufweist, wobei sich die erste und zweite Metallschicht (11, 12) im Körperabschnitt (440a) überlappen, aber die Endabschnitte nur eine der ersten Metallschicht (11) oder zweiten Metallschicht (12) aufweisen, **dadurch gekennzeichnet, dass**
die Bleiplatte (440) einen Anschlussverbindungsabschnitt (440c) zum elektrischen Verbinden mit einem Anschluss (422) eines Schutzschaltungsmoduls (420) aufweist.

## Revendications

1. Bloc-batterie (400) comprenant :
une pluralité d'éléments de batterie (410) comprenant des languettes d'électrodes (411) ; et
au moins une plaque en plomb (440) comprenant au moins deux parties d'extrémité et une partie de corps (440a) entre les parties d'extrémité,
dans lequel la plaque en plomb (440) comprend une première couche métallique (11) et une seconde couche métallique (12), dans lequel les première et seconde couches métalliques (11, 12) se chevauchent dans la partie de corps (440a), mais les parties d'extrémité comprennent une seule parmi la première couche métallique (11) ou la seconde couche métallique (12), caractérisé en ce qui :
le bloc batterie comprend un module de circuit de protection (420) comprenant une borne (422) et la plaque en plomb (440) comprend une partie de raccordement de borne (440c) pour se raccorder électriquement à la borne (422) du module de circuit de protection (420).

2. Bloc-batterie selon la revendication 1, dans lequel les parties d'extrémité comprennent des parties de raccordement d'électrode (440b) pour se raccorder électriquement aux languettes d'électrode (411) des éléments de batterie (410).

3. Bloc-batterie selon la revendication 1, dans lequel une largeur (Wa) de la partie de corps (440a) est inférieure à une largeur de la partie de raccordement de borne (440c) et/ou une largeur (Wa) de la partie de corps (440a) est inférieure à une largeur des parties de raccordement d'électrode (440b).

4. Bloc-batterie selon la revendication 2, comprenant en outre un circuit de coupure thermique (TCO) (442) électriquement raccordé entre la partie de raccordement d'électrode (440b) et la languette d'électrode (411).

5. Bloc-batterie selon la revendication 4, comprenant en outre une languette de plomb auxiliaire (444) électriquement raccordée entre le TCO (442) et la languette d'électrode (411).

6. Bloc-batterie selon l'une quelconque des revendications précédentes, dans lequel les première et seconde couches métalliques (11, 12) sont formées avec le même matériau.

7. Bloc-batterie selon l'une quelconque des revendications précédentes, dans lequel la plaque en plomb (440) comprend en outre un matériau isolant (S) entourant la partie de corps (440a).

8. Bloc-batterie selon l'une quelconque des revendications précédentes, dans lequel les première et seconde couches métalliques (11, 12) sont intégrées ensemble par au moins l'un parmi un soudage ou un adhésif conducteur.

9. Bloc-batterie selon la revendication 1, dans lequel une épaisseur de la partie de corps (440a) est supérieure à une épaisseur des parties de raccordement d'électrode (440b) et les parties de raccordement de borne (440c).

10. Plaque en plomb (440) pour un bloc-batterie comprenant au moins deux parties d'extrémité et une partie de corps (440a) entre les parties d'extrémité, caractérisée en ce qui :
la plaque en plomb (440) comprend une première couche métallique (11) et une seconde couche métallique (12), dans laquelle les première et seconde couches métalliques (11, 12) se chevauchent dans la partie de corps (440a), mais les parties d'extrémité comprennent une seule parmi la première couche métallique (11) ou la seconde couche métallique (12), **caractérisée en ce que** :
la plaque en plomb (440) comprend une partie de raccordement de borne (440c) pour se raccorder électriquement à une borne (422) d'un module de circuit de protection (420).
